# EUROPÄISCHE PATENTSCHRIFT

(11) **EP 0 063 769 B1**
(45) Veröffentlichungstag und Bekanntmachung des Hinweises auf die Patenterteilung: **12.11.1986**
(21) Anmeldenummer: 82103257.0
(22) Anmeldetag: 19.04.1982
(51) Int. Cl.: C08L 69/00, C08J 5/10

(54) **Mit Glas gefülltes Polycarbonat mit verbesserter Schlagzähigkeit**
Glass-filled polycarbonate with impact resistance
Polycarbonate chargé avec du verre à résistance au choc

(30) Priorität: 29.04.1981 US 258817
(43) Veröffentlichungstag der Anmeldung: 03.11.1982
(73) Patentinhaber: MOBAY CORPORATION, Pittsburgh, Pennsylvania 15205 (US)
(72) Erfinder: Rawlings, Herbert L., New Martinsville West Virginia 26155 (US); Reinert, Gerard E., Mc. Murray Pennsylvania 15317 (US)
(74) Vertreter: Gremm, Joachim, Dr.

## Beschreibung

Die vorliegende Erfindung betrifft mit Glas gefüllte aromatische Polycarbonate, die ein Polyanhydrid- Harz enthalten.

Glasfaserverstärkte aromatische thermoplastische Polycarbonate sind bekannt. Bekannt ist auch Polycarbonate mit Maleinsäureanhydrid-Copolymeren abzumischen (siehe US-A-3862 998 (Le A 14 616), US-A-4172 103 (Le A 15 024), US-A-3880 783 (Le A 15 108) und US-A-4205 141 (Le A 17 559)), wobei gegebenenfalls Glasfasern zugesetzt werden können.

Gemäß US-A-3 951 903 ist es bekannt, Polycarbonaten, die gegebenenfalls Glasfasern enthalten können, Carbonsäureanhydride zuzusetzen, zwecks Verbesserung der Spannungsrißbeständigkeit unter feuchten Bedingungen.

Gemäß US-A-4172 859 sind Mischungen aus 60 bis 99 Gew.%, vorzugsweise 80 bis 95 Gew.% Polycarbonaten und 1 bis 40 Gew.%, vorzugsweise 5 bis 20 Gew.% Copolymeren bekannt, die gegebenenfalls auch Glasfasern enthalten können. Als Copolymere sind neben vielen anderen auch solche aus ungesättigten Monomeren mit anhängenden C₁-C₁₂-Kohlenwasserstoffketten und Säureanhydriden möglich. Im Ausführungsbeispiel 13 wird Polycarbonat allerdings nur mit 20 Gew.% eines Ethylen/Propylen/1,4-Hexadiene 2,5-Norbornadien-Furmarsäure-Copolymeren versetzt.

Aus der internationalen Patentanmeldung (PCT) WO-AI-80/00-083 sind Mischungen mit verbesserter Schlagzähigkeit bekannt, die aus aromatischen Polycarbonaten, Glasfasern und Olefin-Copolymeren aufgebaut sind. Insbesondere werden beispielsweise als Olefin-Copolymere Copolymerisate aus Acrylsäure und Ethylen beziehungsweise Propylen verwendet. Es zeigte sich jedoch, daß sowohl Schlagzähigkeit als auch Kerbschlagzähigkeit der erfindungsgemäßen Polycarbonatformmassen gegenüber derartigen Formmassen nochmals eine Verbesserung aufweisen.

Über verbesserte Eigenschaften von mit Glas vertärkten Verbundstoffen wurde in den US-A-4 056 504, 4 147 707, 4 097 435 und 4 048 133 berichtet. Polyanhydride sind bereits aus vernetzten Formmassen bekannt (siehe US-A-3 586 659 und US-A-3 732 337).

Gemäß der vorliegenden Erfindung werden glasfaserverstärkte aromatische Polycarbonate verfügbar gemacht, die sowohl durch eine verbesserte Schlagzähigkeit als auch eine größere Bruchdehnung gekennzeichnet sind.

Erfindungsgemäß geeignete thermoplastiche aromatische Polycarbonate sind Homopolycarbonate und Copolycarbonate sowie deren Mischungen denen z. B. ein oder mehrere der folgenden Diphenole zugrunde liegen
Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-ether
Bis-(hydroxyphenyl)-ketone
Bis-(hydroxyphenyl)-sulfoxide
Bis-(hydroxyphenyl)-sulfone
α,α'-Bis-(hydroxyphenyl)-düsopropylbenzole

sowie deren kernalkylierte und kernhalogenierte Verbindungen. Diese und weitere geeignete Diphenole sind. z. B. in US-A-3 028 365,3148 172, 3 062 781, 2 991 273, 3 271 367, 2 970131 und 2 999 846, in DE-A-1 570 703, 2 063 050, 2 063 052, 2 211 956 und 2 211 957, FR-A-1 561 518 und in der Monographie « H. Schnell, Chemistry and Physics of Polycarbonates, Interscience Publishers, New York, 1964 » beschrieben.

Bevorzugte Diphenole sind z. B.
4.4'-Dihydroxydiphenyl
2,2-Bis-(4-hydroxyphenyl)-propan
2,4-Bis-(4-hydroxyphenyl)-2-methylbutan
1,1-Bis-(4-hydroxyphenyl)-cyclohexan
α,α'-Bis-(4-hydroxyphenyl)-p-diisopropylbenzol
2,2-Bis-(3-methyl-4-hydroxyphenyl)-propan
2.2-Bis-(3-chlor-4-hydroxyphenyl)-propan
Bis-(3,5-dimethyl-4-hydroxyphenyl)-methan
2,2-Bis-(3,5-dimethyl-4-hydroxyphenyl)-propan
Bis-(3,5-dimethyl-4-hydroxyphenyl)-sulfon
2,4-Bis-(3,5-dimethyl-4-hydroxyphenyl)-2-methylbutan
1,1-Bis-(3,5-dimethyl-4-hydroxyphenyl)-cyciohexan
α,α'-Bis-(3,5-dimethyl-4-hydroxyphenyl)-p-düsopropylbenzol
2,2-Bis-(3,5-dichlor-4-hydroxyphenyl)-propan
2,2-Bis-(3,5-dibrom-4-hydroxyphenyl)-propan.

Besonders bevorzugte Diphenole sind z. B. :
2,2-Bis-(4-hydroxyphenyl)-propan
2,2-Bis-(3,5-dimethyl-4-hydroxyphenyl)-propan
2,2-Bis-(3,5-dichlor-4-hydroxyphenyl)-propan
2,2-Bis-(3,5-dibrom-4-hydroxyphenyl)-propan
1,1-Bis-(4-hydroxyphenyl)-cyclohexan.

Bevorzugte aromatische Polycarbonate sind solche, denen ein oder mehrere der als bevorzugt genannten Diphenole zugrundeliegen. Besonders bevorzugt werden Copolycarbonate, denen 2,2-Bis-(4-hydroxyphenyl)-propan und eines der anderen als besonders bevorzugt genannten Diphenole zugrundeliegen. Besonders bevorzugt sind weiterhin Polycarbonate allein auf Basis von 2,2-Bis-(4-hydroxyphenyl)-propan oder 2,2-Bis-(3,5-dimethyl-4-hydroxyphenol)-propan.

Die aromatischen Polycarbonate können nach bekannten Verfahren hergestellt werden, so z. B. nach dem Schmelzumesterungsverfahren aus Bisphenol und Diphenylcarbonat und dem Zweiphasengrenzflächenverfahren aus Bisphenolen und Phosgen, wie es in der obengenannten Literatur beschrieben ist.

Die aromatischen Polycarbonate können durch den Einbau geringer Mengen, vorzugsweise von Mengen zwischen 0.05 und 2.0 Mol-% (bezogen auf eingesetzte Diphenole), an drei- oder mehr als dreifunktionellen Verbindungen, beispielsweise solchen mit drei oder mehr als drei phenolischen Hydroxygruppen verzweigt sein.

Polycarbonate dieser Art sind z. B. in DE-A-1 570 533, 1 595 762, 2116 974, 2 113 347 und 2 500 092, GB-A-1 079 821, und US-A-3 544 514 beschrieben.

Geeignete drei bzw. mehr als dreifunktionelle Verbindungen sind beispielsweise Tetra-(4,4-hydro- xyphenylisopropyl)-phenoxy)-methan und 1,4-Bis-(4',4"-dihydroxytriphenyl)-methyl)-benzol, 2,4-Dihydroxybenzoesäure, Trimesinsäure, Cyanurchlorid, 3,3-Bis-(4-hydroxyphenyl)-2-oxo-2,3-dihydroindol und 3,3-Bis-(4-hydroxy-3-methyl-phenyl)-2-oxo-2,3-dihydroindol.

Die aromatischen Polycarbonate sollen in der Regel mittlere Gewichtsmittel-Molekulargewichte M_{w} von 10 000 bis über 200 000, vorzugsweise von 20 000 bis 80 000 haben ermittelt durch Messungen der rel. Viskosität in CH₂CI₂ bei 25 °C und einer Konzentration von 0.5 Gew.-%.

Im Falle der Polycarbonatmischungen können den hochmolekularen Polycarbonaten mit M_{w} von 10000 bis 200000 auch kleine Anteile niedermolekularer Polycarbonate, z.B. mit einem mittleren Polymerisationsgrad von 2-20, zugemischt sein.

Zur Einstellung des Molekulargewichts M_{w} der Polycarbonate werden in bekannter Weise Kettenabbrecher, wie beispielsweise Phenol oder Halogenphenole oder Alkylphenole in den berechneten Mengen eingesetzt.

Erfindungsgemäß verwendbare Glasfasern sind beispielsweise Fasern mit niedrigem Alkali-Gehalt aus einem Aluminiumborosilikat-Glas mit einem maximalen Gehalt an Alkalimetalloxid von 2,0 Gew.-% (E-Glas), die einen Durchmesser von 8 bis 15 µm und eine Länge zwischen 300 und 800 µm (kurze Glasfasern) oder von 2000 bis 12000 µm (geschnittene Glasspinnfäden) besitzen, sowie auch Rovings. Die Glasfasern liegen in dem Polycarbonat in einer Menge von etwa 5 bis 40 Gew.-%, vorzugsweise etwa 10 bis 30 Gew.-%, bezogen auf das Gesamtgewicht der Zusammensetzung, vor.

Eine weitere Beschreibung von Glasfasern, die für die praktische Ausführung der vorliegenden Erfindung geeignet sind, findet sich in Harro Hagen, «Glasfaserverstärkte Kunststoffe•, Berlin-Göttingen-Heidelberg 1961 (Springer-Verlag), sowie in der US-A-3 577 378.

Erfindungsgemäß geeignete Polyanhydrid-Harze sind durch ihre Strukturformel (I) 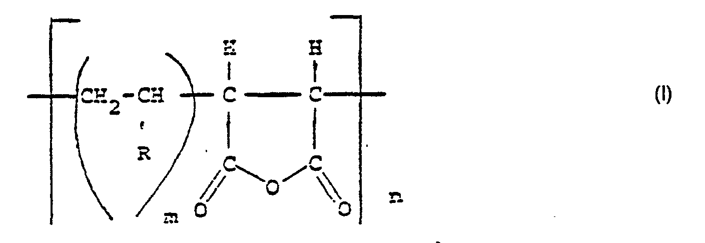 gekennzeichnet, in der R einen Phenyl- oder einen alkyl-substituierten Phenyl-Rest oder ein Alkyl-Rest mit 4 bis 28 C-Atomen, vorzugsweise 8 bis 16 Kohlenstoff-Atomen, besonders bevorzug mit 14 bis 16 Kohlenstoff-Atomen, bezeichnet. Im allgemeinen braucht die Zahl der Kohlenstoff-Atome von R nicht größer als 28 zu sein, wobei n eine ganze Zahl von 1 bis 200 und m eine ganze Zahl von 1 bis 3 ist. In der vor allen anderen bevorzugten Ausführungsform sind n etwa 145 und m 1. Das Polyanhydrid-Harz ist im wesentlichen ein Copolymerisat aus Maleinsäureanhydrid und einem α-Olefin, wobei die Herstellung dieses copolymerisats in der US-A-586 659 beschrieben wird. Beispiele für Olefin-Verbindungen oder Gemische aus Olefinen, die sich zur Bildung des Polyanhydrid-Bestandteils der Zusammensetzuhg eignen, sind : Ethylen, 1-Propen, 1-Decen, 1-Buten, 1-Undecen, 1-Isobutylen, 1-Hexen, 1-Dodecen, 1-Penten, 1-Tridecen, 1-Hepten, 1-Octen, 1-Tetradecen, 1-Octadecen, 1-Nonadecen, Styrol, 1-Nonen sowie Gemische aus diesen.

Die Copolymerisation kann in der Weise durchgeführt werden, daß die olefinische Verbindung mit dem Maleinsäureanhydrid in einem geeigneten Lösungsmittel in Gegenwart eines Katalysators in Brührung gebracht wird. Das Molverhältnis des Mono-a-olefins zu dem Maleinsäureanhydrid liegt zweckmäßigerweise etwa zwischen 1 : 1 und 3 1.

Das bevorzugte, für die praktische Ausführung der vorliegenden Erfindung geeignete Polyanhydrid ist ein Copolymerisat aus 1-Octadecen und Maleinsäureanhydrid in einem Molverhältnis 1 : 1 und ist bei der Gulf Oil Chemical Company unter der Handelsbezeichnung PA-18^{®} erhältlich. PA-18^{®} ist im einzelnen durch die in der folgenden Tabelle aufgeführten Eigenschaften gekennzeichnet :

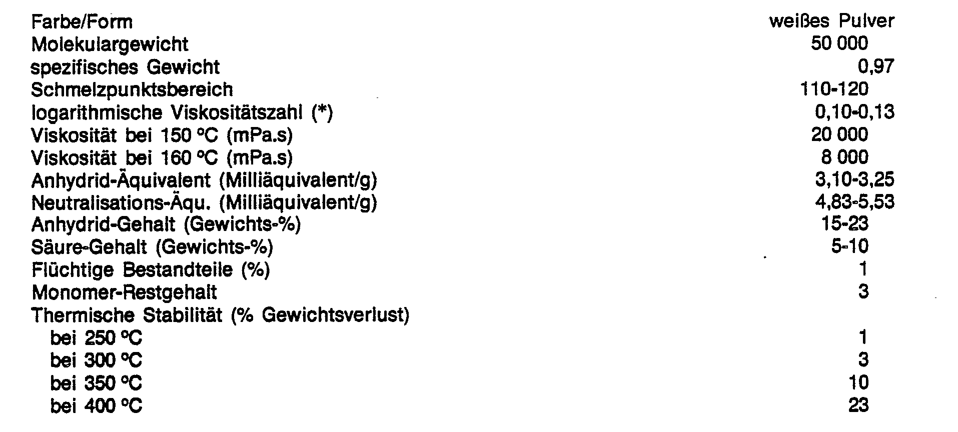

(°) 5 g/100 ml in Methylisobutylketon bei 25 °C.

Bei der praktischen Ausführung können glasfaserverstärkte Polycarbonat-Zusammensetzungen, die 5 bis 40 Gewichts-%, vorzugsweise 10 bis 30 Gewichts-%, Glasfasern enthalten, durch Einarbeiten von 0,1 bis 10 und vorzugsweise von 0,5 bis 5 Gewichts-% des Polyanhydrid-Harzes modifiziert werden, wobei eine Menge von 0,8 bis 3,75 Gewichts-% Polyanhydridharz besonders bevorzugt wird ; hierbei beziehen sich alle Gewichtsangaben jeweils auf Gesamtgewicht bestehend aus Polycarbonat und Glasfasern und Polyanhydridharz.

Zur Herstellung von Formmassen gemäß der vorliegenden Erfindung werden die einzelnen Bestandteile in bekannten Mischvorrichtungen wie Knetern, Einschneckenextrudern, Doppelschneckenextrudem und Mischwalzwerken miteinander vermischt.

Die erfindungsgemäßen Formmassen können zusätzlich andere in der Polycarbonatchemie übliche Additive zugesetzt werden. Insbesondere können die bekannten Flammschutzmittel wie etwa Kaliumperfluorbutansulfonat zugesetzt werden. Der Zusatz derartiger Flammschutzmittel zu Polycarbonaten ist beispielsweise in US-A-3 775 367 beschrieben.

Die Erfindung wird durch folgende Beispiele weiter erläutert, ist jedoch nicht auf diese beschränkt.

In den Beispielen wurden die Schlagzähigkeitswerte nach ASTM d-256, das Zugverhalten nach ASTM d-638, die Wärmeformbeständigkeit nach ASTM d-648 und die Pfeilfallprobe nach ASTM d-1709 bzw. d-3029 gemessen.

### Beispiele

### Beispiel 1

Zur Erhöhung der Schlagzähigkeit modifizierte, glasfaserverstärkte Polycarbonat-Zusammensetzungen wurden mit Hilfe eines Einschnecken-Extruders (Schnecke 2,75 : 1 ; Drehgeschwindigkeit 60 min-¹) bei etwa 252 °C (485 °F) kompoundiert. Alle Zusammensetzungen basierten auf dem Polycarbonat-Harz auf Basis Bisphenol-A (ηᵣₑₗ 1,267) und enthielten 10 Gewichts-% Glasfasern (Owens Corning 415BB, 4,76 mm (3/16")). Die Auswirkungen der Einarbeitung verschiedener Polyanhydrid-Harze, die sich voneinander durch ihre jeweiligen a-Olefin-Ketten unterschieden, auf die Schlagzähigkeit und das Verhalten bei Zugbeanspruchung wurden gemessen. Sämtliche Zusammensetzungen dieses Beispiels wurden so bereitet, daß sie 1,25 Gewichts-% Poiyanhydrid enthielten. Die Molekulargewichte der Polyanhydride liegen zwischen 50 000 und 75 000.

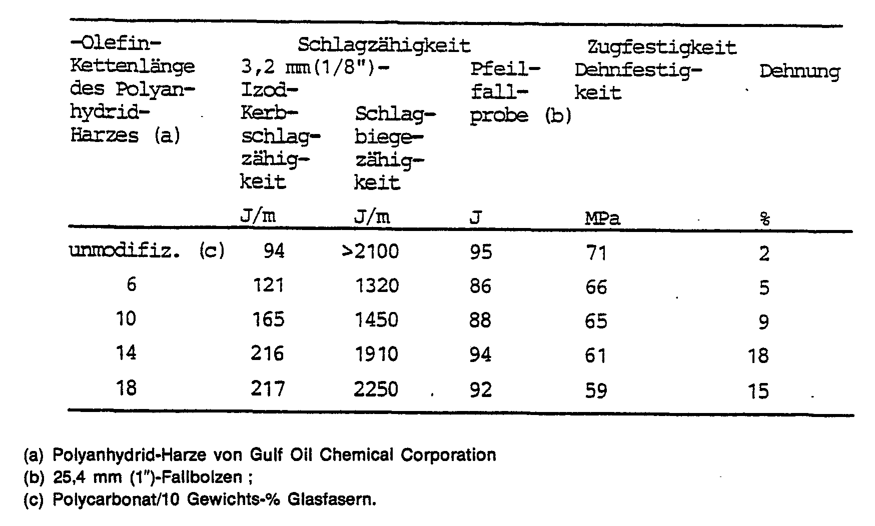

### Beispiel 2

Zur Erhöhung der Schlagzähigkeit modifizierte, glasfaserverstärkte Polycarbonat-Zusammensetzungen wurden entsprechend der in Beispiel 1 beschriebenen Arbeitsweise kompoundiert. Die Zusammensetzung basierten auf einem Bisphenol-A-Polycarbonat (ηᵣₑₗ 1,267) und enthielten alle jeweils 10 Gewichts-% Glasfasern, variierten jedoch hinsichtlich der darin eingearbeiten Menge PA-18^{®} (Polyanhydrid des a-Octadecens). Die Auswirkungen der Variation der Mengen des PA-18^{®} auf die Schlagzähigkeit und das Verhalten bei Zugbeanspruchung der Zusammensetzungen gemessen und sind nachstehend tabelliert.

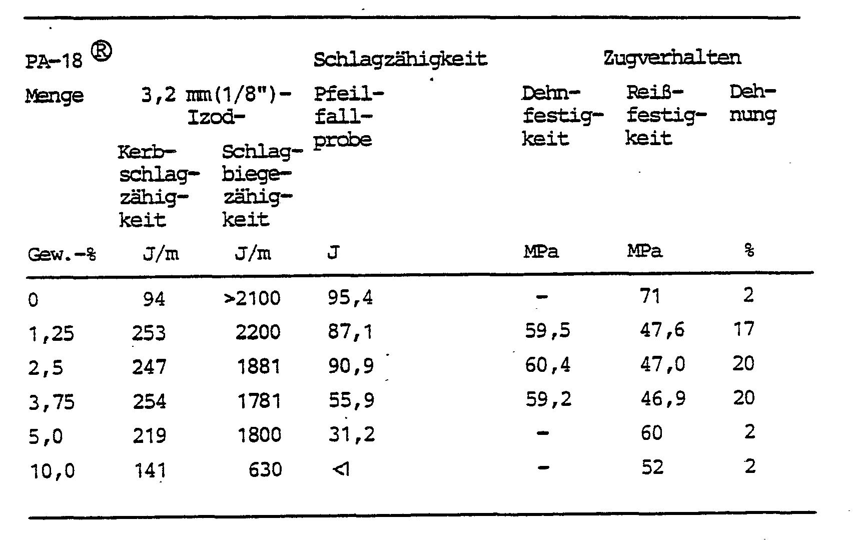

### Beispiel 3

Zur Erhöhung der Schlagzähigkeit modifizierte, glasfaserverstärkte, flammwidrige Polycarbonat-Zusammensetzungen wurden entsprechend der im Beispiel 1 beschriebenen Arbeitweise kompoundiert. Die Zusammensetzungen basierten auf einem glasfaserverstärkten, flammwidrigen Bisphenol-A-Polycarbonat (ηᵣₑₗ 1,267), Bromgehalt 0,335 Gew.-%, Glasfasergehalt 10 Gew.-% und unterschieden sich voneinander in den darin eingearbeiteten Mengen PA-18^{®.} Die folgende Tabelle zeigt den Zusammenhang zwischen der Menge PA-18^{®} und den Eigenschaften der Zusammensetzungen.

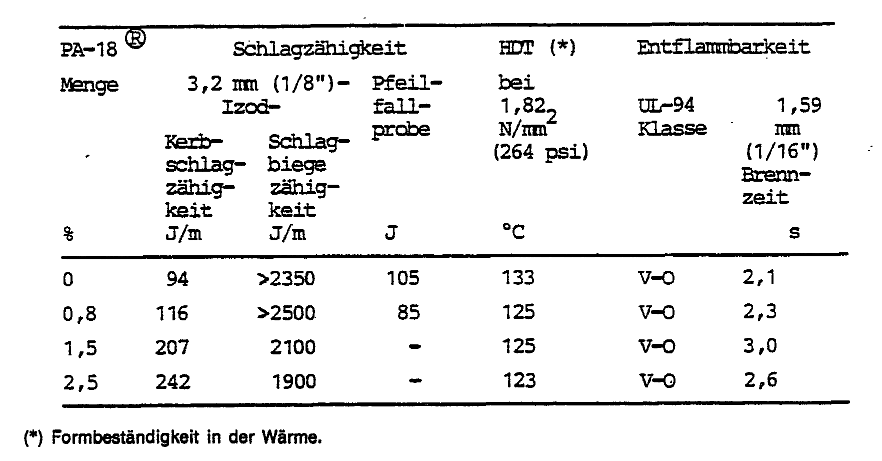

### Beispiel 4

Die Auswirkung der Erhöhung des Gehaltes an zugesetztem modifizierenden Mittel auf die Schlagzähigkeit von glasfaserverstärkten Polycarbonat-Zusammensetzungen mit einem Gehalt an Glasfasern von 20 Gewichts-% wurde an Probekörpern gemessen, die wie oben beschrieben hergestellt wurden. Die Testergebnisse sind in der nachstehenden Tabelle dargestellt. Das eingesetzte Polycarbonat entspricht dem des Beispiels 1.

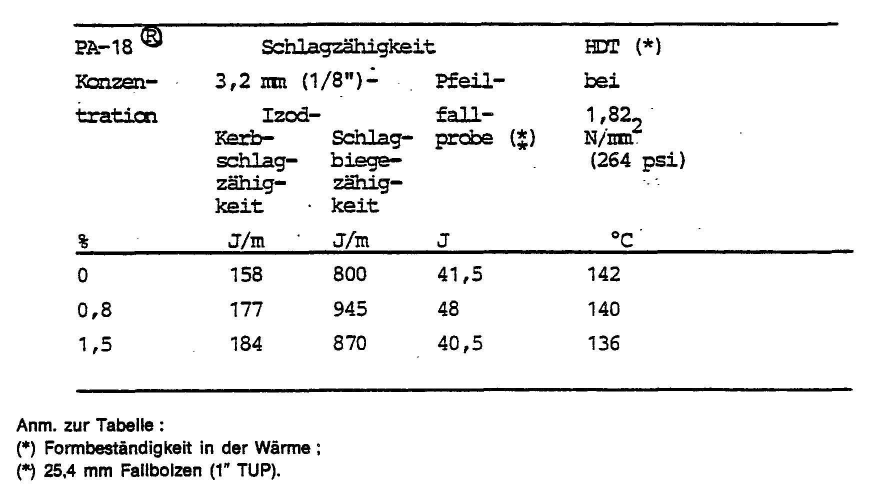

### Beispiel 5

Ähnlich den vorbeschriebenen Zusammensetzungen wurden Polycarbonate hergestellt, die 30 Gewichts-% Glasfasern enthalten ; ihre Eigenschaften sind nachstehend aufgeführt. Das eingesetzte Polycarbonat entspricht dem des Beispiels 1.

### (Siehe Tabelle Seite 7 f.)

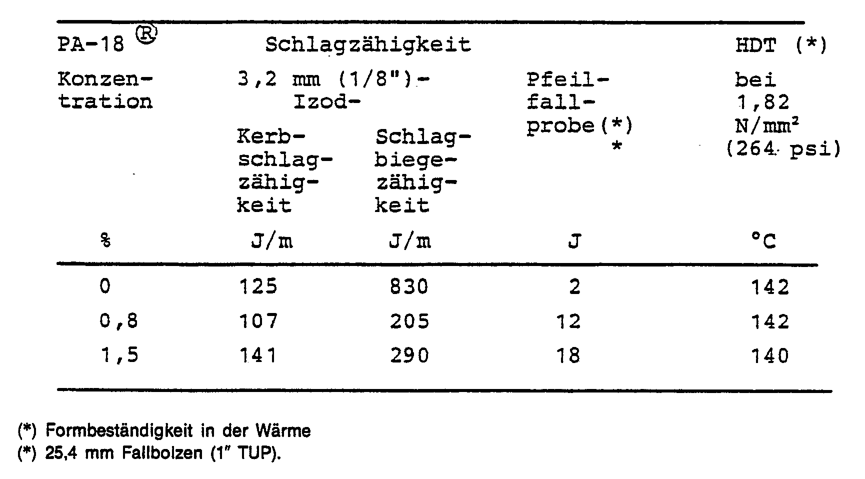

Die bei der Herstellung der glasfaserverstärkten Polycarbonate angewandten Verformungsbedingungen sind in der nachstehenden Tabelle angegeben.

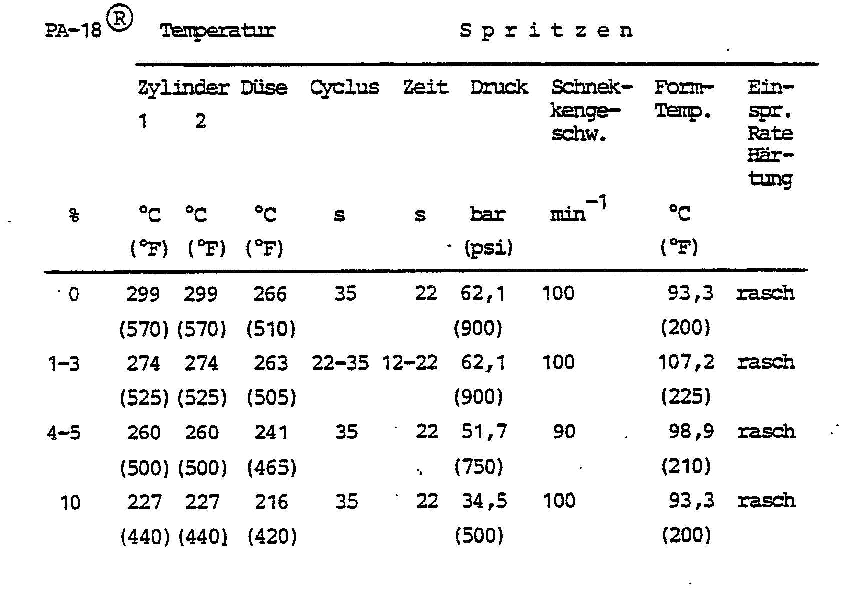

Wie bei einer Analyse der Daten leicht zu erkennen ist, nahm die Anfälligkeit der glasfaserverstärkten Polycarbonate mit der Einarbeitung der Polyanhydrid-Harzes in diese ab. Es ist weiter zu bemerken, daß die Desensibilisierung gegenüber der Kerbschlagwirkung der a-Olefin-Kettenlänge des zugesetzten Polyanhydrids direkt proportional ist.

## Patentansprüche

1. Polycarbonat-Formmasse enthaltend
a) ein aromatisches Polycarbonat-Harz,
b) etwa 5 bis 40 Gewichtsprozent, bezogen auf die Gesamtmasse, Glasfasern und
c) etwa 0,1 bis 10 Gew.-%, bezogen auf die Gesamtmasse, eines Polyanhydrid-Harzes, das durch die Strukturformel 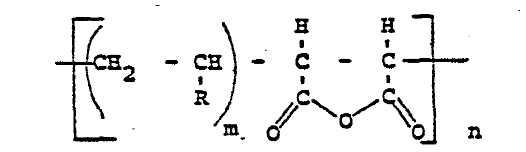 gekennzeichnet ist, in der R ein Phenyl- oder alkylsubstituierter Phenyl-Rest oder ein Alkyl-Rest mit 4 bis 28 Kohlenstoff-Atomen, n eine ganze Zahl von 1 bis 200 und m eine ganze Zahl von 1 bis 3 sind.

2. Formmasse nach Anspruch 1, dadurch gekennzeichnet, daß die Glasfasern in eine Menge zwischen 10 und 30 Gewichtsprozent, bezogen auf das Gewicht der Masse, vorliegen.

3. Formmasse nach Anspruch 1, dadurch gekennzeichnet, daß das Polyanhydrid-Harz in einer Menge zwischen 0,5 und 5 Gew: %, bezogen auf das Gewicht der Masse, vorliegt.

4. Formmasse nach Anspruch 1, dadurch gekennzeichnet, daß das Polyanhydrid ein Copolymerisat aus a-Octadecen und Maleinsäureanhydrid mit einem Molverhältnis 1 : 1 ist.

5. Formmasse nach Anspruch 1, dadurch gekennzeichnet, daß das Polycarbonat auf Bisphenol A basiert.

6. Verfahren zur Desensibilisierung der Kerbschlagwirkung auf glasfaserverstärkte aromatische Polycarbonat-Zusammensetzungen, die 5 bis 40 Gew.-% Glasfasern enthalten, dadurch gekennzeichnet, daß den Massen etwa 0,1 bis 10 Gew.-%, bezogen auf das Gewicht der Massen, eines Polyanhydrids zugemischt werden, das durch die Strukturformel 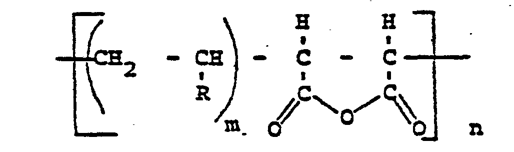 gekennzeichnet ist, in der R ein Phenyl-Rest oder ein Alkyl-Rest mit 4 bis 28 Kohlenstoff-Atomen, n eine ganze Zahl von 1 bis 200 und m eine ganze Zahl von 1 bis 3 sind.

7. Formmasse nach Anspruch 1, dadurch gekennzeichnet, daß sie zusätzlich Flammverzögerungsmittel enthält.

## Claims

1. Polycarbonate moulding composition containing
a) an aromatic polycarbonate resin,
b) about 5 to 40 per cent by weight, based on the total composition, of glass fibres and
c) about 0.1 to 10 % by weight, based on the total composition, of a polyanhydride resin which is characterised by the structural formula 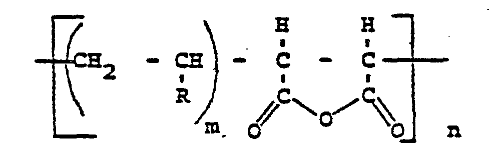 in which
R is a phenyl or alkyl-substituted phenyl radical or an alkyl radical with 4 to 28 carbon atoms,
n is an integer from 1 to 200 and
m is an integer from 1 to 3.

2. Moulding composition according to Claim 1, characterised in that the glass fibres are present in a quantity of between 10 and 30 per cent by weight, based on the weight of the composition.

3. Moulding composition according to Claim 1, characterised in that the polyanhydride resin is present in a quantity of between 0.5 and 5 % by weight, based on the weight of the composition.

4. Moulding composition according to Claim 1, characterised in that the polyanhydride is a copolymer of a-octadecene and maleic acid anhydride with a molar ratio of 1 : 1.

5. Moulding composition according to Claim 1, characterised in that the polycarbonate is based on bisphenol A.

6. Process for desensitising the notch impact effect on glass-fibre-reinforced aromatic polycarbonate compositions containing 5 to 40 % by weight of glass fibres, characterised in that about 0.1 to 10 % by weight, based on the weight of the compositions, of a polyanhydride characterised by the structural formula 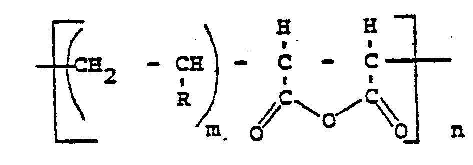 in which
R is a phenyl radical or an alkyl radical with 4 to 28 carbon atoms,
n is an integer from 1 to 200 and
m is an integer from 1 to 3,
are added to the compositions.

7. Moulding composition according to Claim 1, characterised in that it additionally contains flame- retarding agents.

## Revendications

1. Matière à mouler en polycarbonate contenant :
a) une résine de polycarbonate aromatique ;
b) environ 5 à 40 % en poids, par rapport à la masse totale de fibres de verre ; et
c) environ 0,1 à 10% en poids, par rapport à la masse totale, d'une résine de polyanhydride, caractérisée par la formule de structure : 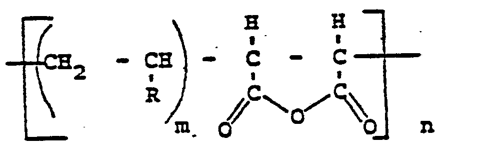
dans laquelle R représente un groupe phényle ou un groupe phényle substitué par un groupe alkyle, ou un groupe alkyle en C4-C28, n est un nombre entier de 1 à 200 et m un nombre entier de 1 à 3.

2. Matière à mouler selon la revendication 1, caractérisée en ce qu'elle contient les fibres de verre en quantités de 10 à 30 % de son poids.

3. Matière à mouler selon la revendication 1, caractérisée en ce qu'elle contient la résine de polyanhydride en quantités de 0,5 à 5 % du poids de la masse.

4. Matière à mouler selon la revendication 1, caractérisée en ce que le polyanhydride est un copolymère de l'alpha-octadécène et de l'anhydride maléique à un rapport molaire de 1 : 1.

5. Matière à mouler selon la revendication 1, caractérisée en ce que le polycarbonate est à base de bisphénol A.

6. Procédé pour désensibiliser à l'égard des effets de choc sur barreau entaillé des compositions de polycarbonates aromatiques renforcées par des fibres de verre, contenant de 5 à 40 % en poids de fibres de verre, caractérisé en ce que l'on mélange à ces masses d'environ 0,1 à 10% de leur poids d'un polyanhydride caractérisé par la formule de structure : 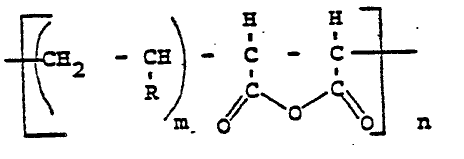
dans laquelle R représente un groupe phényle ou un groupe alkyle en C4-C28, n est un nombre entier de 1 à 200 et m un nombre entier de 1 à 3.

7. Matière à mouler selon la revendication 1, caractérisée en ce qu'elle contient en outre des agents ignifugeants.
